**Europäisches Patentamt**

**European Patent Office**

**Office européen des brevets**

(19)

(11) Veröffentlichungsnummer : **0 157 737
B1**

(12) **EUROPÄISCHE PATENTSCHRIFT**

(45) Veröffentlichungstag der Patentschrift :
07.09.88

(21) Anmeldenummer : 85810109.0

(22) Anmeldetag : 12.03.85

(51) Int. Cl.⁴ : **C 22 F 1/00**, C 21 D 9/56,
B 32 B 31/08

(54) Verfahren zur Herstellung eines Metall-Kunststoff-Verbundkörpers.

(30) Priorität : 23.03.84 CH 1476/84

(43) Veröffentlichungstag der Anmeldung :
09.10.85 Patentblatt 85/41

(45) Bekanntmachung des Hinweises auf die Patenterteilung : 07.09.88 Patentblatt 88/36

(84) Benannte Vertragsstaaten :
AT CH DE FR GB IT LI

(56) Entgegenhaltungen :
FR-A- 2 466 342
GB-A-    777 077
GB-A- 1 119 279
GB-A- 1 220 080
GB-A- 1 437 001
US-A- 3 660 200
US-A- 3 976 528

(73) Patentinhaber : SCHWEIZERISCHE ALUMINIUM AG
CH-3965 Chippis (CH)

(72) Erfinder : Bregenzer, René
Waldparkstrasse 45
CH-8212 Neuhausen am Rheinfall (CH)

EP 0 157 737 B1

## Beschreibung

Die Erfindung bezieht sich auf ein Verfahren zur Herstellung eines Metall-Kunststoff-Verbundkörpers gemäss Oberbegriff von Anspruch 1.

Zur Vermeidung von Knitterfalten bei Verbundplatten oder Laminaten ist es bekannt, die Metallbänder vor dem Kaschieren mittels IR-Strahler, Gasflammen oder Heissluft zu erwärmen.

So wird nach der CH-PS 478 652 ein Banddurchlaufglühofen eingesetzt, der drei hintereinander folgende Zonen zum Aufheizen, auf Temperatur Halten und Abkühlen des Metallbandes aufweist. Eine exakte Steuerung des Temperaturprofils über die Bandbreite hat sich als ausserordentlich schwierig erwiesen, sodass die Neigung zur Bildung von Knitterfalten, insbesondere in Längsrichtung, verhältnismässig gross ist.

Je breiter die Verbundbahn gefertigt werden soll, desto kritischer ist die Erwärmung der metallischen Bänder. Bereits geringe Temperaturdifferenzen zwischen den beiden Rändern führen zu Knitterfalten. Insbesondere sind bei Erwarmung von metallischen Bändern mit einer Breite von mehr als 800 mm zur Herstellung von Verbundplatten der genannten Art in dieser Breite die Massnahmen nach der genannten Patentschrift ungeeignet, die Knitterfalten zu verhindern. Ohne erheblichen Ausschuss ist die Fertigung von Verbundplatten mit Breiten über 800 mm nicht möglich.

Aus der GB-A-1 220 080, die sich auf die Herstellung von Metall-Kunststoff-Laminat bezieht, ist die Verwendung von beheizten Doppelmantelwalzen mit einem zirkulierenden Heizmedium zum Aufheizen einer Metallfolie, die anschliessend mit einem Film aus thermoplastischem Kunststoff beschichtet wird, bekannt.

Angesichts dieser Gegebenheiten und ausgehend vom letztgenannten Stand der Technik hat sich der Erfinder die Aufgabe gestellt, ein Verfahren der eingangs erwähnten Art zu schaffen, welches die Erwärmung des/der metallischen Bandes/Bänder mit einer Breite von mehr als 800 mm auf Kaschiertemperatur ohne Knitterfaltenbildung ermöglicht.

Erfindungsgemäss wird die gestellte Aufgabe durch ein Verfahren gelöst, welches sich nach dem Wortlaut des Anspruchs 1 auszeichnet. Vorteilhafte Weiterbildungen sind durch die Merkmale der Ansprüche 2 bis 5 gekennzeichnet.

Mit dem erfindungsgemässen Verfahren können überraschend die Vorurteile der Fachwelt, welche die Erwärmung von breiten Metallbändern mit Walzen als ungeeignet hält, weil sich die Bänder wegen des Temperatursprungs verziehen bzw. verknittern und dadurch Scheuerungen ausgesetzt sind, widerlegt werden.

Gegenüber anderen Wärmequellen haben Walzen den wesentlichen Vorteil, dass sie lediglich die praktisch gleiche Temperatur wie die zu erwärmenden Bänder bzw. Folien aufweisen müssen und nicht bedeutend höhere Temperaturen.

Die vorrichtungsmässige Vereinfachung zur Durchführung der Erfindung drückt sich neben erhöhtem wärmetechnischen Gesamtwirkungsgrad darin aus, dass an Stelle von teuren und voluminösen Warmluftöfen lediglich 2 bis 6, vorzugsweise 2 bis 4 Walzen, installiert und betrieben werden müssen, was die Betriebskosten erheblich herabsetzt.

Die Temperaturstufen zwischen den in Durchlaufrichtung zunehmend auf höhere Temperaturen eingestellte Walzen liegt bevorzugt zwischen 20 und 70° C, wobei zweckmässig alle Temperaturstufen gleich sind. Insbesondere vom wirtschaftlichen Standpunkt aus betrachtet, haben sich Temperaturstufen von 50 bis 60° C als optimal erwiesen, wobei wiederum vorzugsweise alle Temperaturstufen gleich sind.

Walzen, die als Doppelmantelwalzen mit im Querschnitt ringförmigem Mantelraum für das Heizmedium ausgebildet sind, erfüllen die gestellten Bedingungen, sie führen auf der Arbeitsfläche stets zu Temperaturschwankungen von ≤±1° C. Vorzugsweise ist der Mantelraum durch zwei spiralförmig verlaufende Rippen derart unterteilt, dass das Heizmedium im Gegenstrom verläuft. So treten bei den erfindungsgemäss stufenweise vorgewärmten Metallbändern weder verzogene Stellen noch Scheuerungen auf.

Der Umschlingungswinkel, mit welchem die Bänder bzw. Folien um die Walzen gelenkt werden, liegt im Bereich von 60 bis 120°. Grössere Umschlingungswinkel haben wohl den Vorteil eines längeren Kontaktes und damit der Temperaturhomogenisierung von Walze und Band. Die längere Kontaktzeit ruft dagegen die Gefahr von Verscheuerungen hervor.

In der Praxis stellt der Fachmann den Umschlingungswinkel je nach den übrigen Parametern, wie beispielsweise Bandmaterial, Banddicke, Walzentemperatur, Walzendurchmesser, Laufgeschwindigkeit und Raumverhältnissen, ein. Die Bänder können vorbehandelt sein, z. B. durch Anbringen von Konversionsschichten, oder nicht.

Bei der Herstellung von Metall-Kunststoff-Verbundkörpern sind metallische Bänder bis zu einer Bandbreite von 1 500 mm erfolgreich eingesetzt worden. Im fertigen Produkt sind keine Knitter oder Falten festgestellt worden.

Das erfindungsgemässe Verfahren kann vorteilhaft bei der kontinuierlichen Herstellung von Verbundkörpern mit einem 1 bis 20 mm dicken Kunststoffkern angewendet werden.

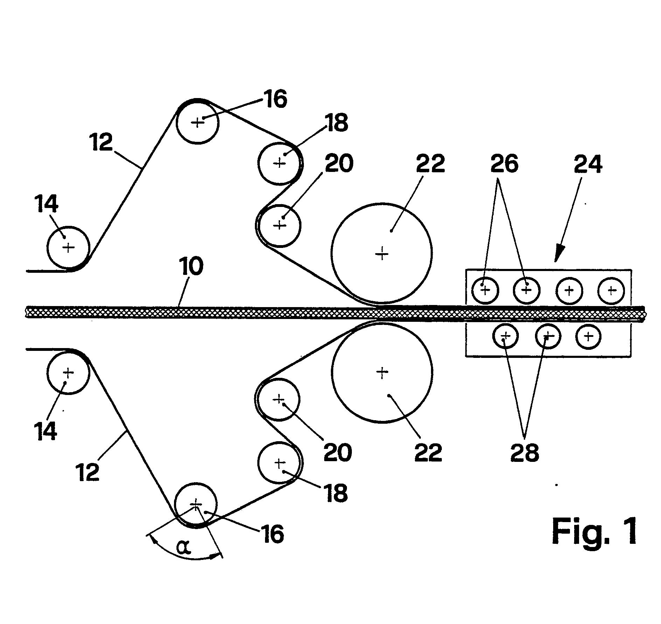

Die Erfindung wird anhand der Zeichnung näher erläutert.

Eine 5 mm dicke Kernschicht 10 aus einem thermoplastischen Kunststoff (Polyäthylen, Polyvinylchlorid usw.) wird beidseitig mit Metallbändern 12 beschichtet. In der Praxis sind 1500 mm breite und bis zu 0,25 mm dicke Bänder auf dieser Anlage eingesetzt worden :
— Stahl : 0,2 x 1 200 mm
— Aluminium : 0,25 x 1 500 mm
— Edelstahl : 0,15 x 1 000 mm

Die Bänder 12 werden vorerst durch Umlenkrollen 14 aus dem Bereich der Kernschicht 10 weggeführt, dann über je drei Walzenpaare 16, 18, 20, welche auf 70° C, (Walzenpaar 16) 120° C (Walzenpaar 18) und 170° C (Walzenpaar 20) erwärmt sind, mit einem Umschlingungswinkel (α) von je 90° zu dem auf 220° C erwärmten Kaschierwalzenpaar 22 geführt. Die Walzen 16, 18, 20 haben einen Durchmesser von je 250 mm, die Kaschierwalzen 500 mm.

Zwischen den Kaschierwalzen 22 werden die Metallbänder 12 unter Einwirkung von Druck und Wärme mit der Kernschicht 10 verbunden. Mit bekannten zusätzlichen Einrichtungen kann eine Klebefolie zwischen die Kernschicht 10 und die Bänder 12 geführt werden.

Damit die erzeugten Verbundbahnen absolut plan sind, werden diese durch einen Richtrollensatz 24, welcher Gegenstand der DE-PS 2 044 696 ist, geleitet. Die oberen Walzen 26 und die unteren Walzen 28 sind jeweils gegeneinander horizontal auf Lücke versetzt angeordnet, wobei die in Durchlaufrichtung der Schichten ersten Walzen 26, 28 beheizbar und die letzten Walzen 26, 28 kühlbar ausgebildet sind.

## Patentansprüche

1. Verfahren zur Herstellung eines Metall-Kunststoff-Verbundkörpers durch Kaschieren eines thermoplastischen Kunststoffbandes (10) mit mindestens einem Metallband (12), das an Heizwalzen (16, 18, 20) ablaufend erwärmt wird und dann gemeinsam mit dem Kunststoffband (10) zwischen zwei Kaschierwalzen (22) durchläuft, wobei die am Metallband (12) ablaufende Kaschierwalze (22) als auf Kaschiertemperatur gehaltene Doppelmantelwalze ausgebildet ist, dadurch gekennzeichnet, dass das Metallband (12) mit einem zwischen 60° und 120° liegenden Umschlingungswinkel (α) um 2 bis 6 Walzen (16, 18, 20) mit in Durchlaufrichtung stufenweise zunehmend höher eingestellter Temperatur gelenkt wird, mindestens das Kaschierwalzenpaar (22) einzeln beheizbar ist und alle Walzen (16, 18, 20, 22) auf den Arbeitsflächen Temperaturschwankungen kleiner/gleich ± 1° C aufweisen.

2. Verfahren nach Anspruch 1, dadurch gekennzeichnet, dass die Temperaturstufen zwischen den Walzen (16, 18, 20, 22) auf 20 bis 70° C, eingestellt werden.

3. Verfahren nach Anspruch 2, dadurch gekennzeichnet, dass die Temperturastufen zwischen den Walzen (16, 18, 20, 22) auf 50 bis 60° C, eingestellt werden.

4. Verfahren nach Anspruch 2 oder 3, dadurch gekennzeichnet, daß die Temperaturstufen zwischen allen Walzen (16, 18, 20, 22) gleich groß eingestellt werden.

5. Verfahren nach einem der Ansprüche 1 bis 4, dadurch gekennzeichnet, dass als Walzen (16, 18, 20, 22) Doppelmantelwalzen mit im Querschnitt ringförmigem Mantelraum, der durch zwei spiralförmig verlaufende Rippen derart unterteilt ist, dass das Heizmedium im Gegenstrom verläuft, eingesetzt werden.

## Claims

1. Process for the production of a metal-plastic composite by laminating a thermoplastic strip (10) with at least one metal strip (12), which is warmed as it passes over heating rollers (16, 18, 20) and then passes together with the plastic strip (10) between two laminating rollers (22), the laminating roller (22) which runs on the metal strip (12) being designed as a double shell roller which is maintained at the laminating temperature, characterized in that the metal strip (12) is guided at a wrap-round angle (α) of between 60° and 120° around 2 to 6 rollers (16, 18, 20) whose temperature is increased by steps in the direction of advance, at least the pair of laminating rollers (22) is individually heatable, and all rollers (16, 18, 20, 22) possess temperature fluctuations less than/equal to ±1° C on the working surfaces.

2. Process according to Claim 1, characterized in that the temperature steps between the rollers (16, 18, 20, 22) are adjusted to 20 to 70° C.

3. Process according to Claim 2, characterized in that the temperature steps between the rollers (16, 18, 20, 22) are adjusted to 20 to 70°C.

4. Process according to Claim 2 or 3, characterised in that the temperature steps between all rollers (16, 18, 20, 22) are adjusted to be identical.

5. Process according to one of Claims 1 to 4, characterised in that the rollers used (16, 18, 20, 22) are double shell rollers having a shell space which is annular in cross section and is divided by two spirally extending ribs in a manner such that the heating medium flows in counter current.

## Revendications

1. Procédé pour fabriquer un produit composite métal/matière plastique par revêtement d'une bande (10) de matière thermoplastique avec au moins une bande métallique (12) que l'on chauffe en le faisant passer sur des cylindres chauffants (16, 18, 20) et que l'on fait passer ensuite ensemble avec la bande (10) de matière plastique entre deux cylindres de revêtement (22), le cylindre de revêtement (22) avec lequel la bande métallique (12) vient en contact étant realisé comme un cylindre à double paroi maintenu à la température de revêtement, caracterisé en ce que on fait passer la bande metallique (12) avec un angle d'enroulement (α) compris entre 60° et 120° sur 2 à 6 cylindres (16, 18, 20) dont la température est ajustée à des valeurs qui augmentent par échelons dans le sens du défilement, au moins la paire de cylindres de revêtement (22) pouvant être chauffée séparément et tous les cylindres (16, 18, 20, 22) présentant, sur leurs surfaces de travail, des variations de température inférieures ou égales à 1° C environ.

2. Procédé selon la revendication 1, caractérisé en ce que les échelons de température entre les cylindres (16, 18, 20, 22) sont ajustés entre 20 et 70° C.

3. Procédé selon la revendication 2, caractérisé en ce que les échelons de température entre les cylindres (16, 18, 20, 22) sont ajustés à 50-60° C.

4. Procédé selon la revendication 2 ou 3, caractérisé en ce que les échelons de température entre tous les cylindres (16, 18, 20, 22) sont de même grandeur.

5. Procédé selon une des revendications 1 à 4, caractérisé en ce que les cylindres (16, 18, 20, 22) sont des cylindres à double paroi, possédant un espace d'enveloppe de forme annulaire en section droite, lequel est partagé par deux nervures hélicoïdales, de manière que le fluide de chauffage circule à contre-courant.

Fig. 1